# EUROPÄISCHE PATENTSCHRIFT

(11) **EP 0 909 434 B1**
(45) Veröffentlichungstag und Bekanntmachung des Hinweises auf die Patenterteilung: **24.10.2001**
(21) Anmeldenummer: 97925042.0
(22) Anmeldetag: 04.06.1997
(51) Int. Cl.: G07F 7/10

(54) **VERFAHREN UND VORRICHTUNG ZUM LADEN VON INPUTDATEN IN EINEN ALGORITHMUS BEI DER AUTHENTIKATION**
METHOD AND DEVICE FOR LOADING INPUT DATA INTO AN ALGORITHM DURING AUTHENTICATION
PROCEDE ET DISPOSITIF POUR CHARGER DES DONNEES D'ENTREE DANS UN ALGORITHME LORS D'UNE PROCEDURE D'AUTHENTIFICATION

(30) Priorität: 05.06.1996 DE 19622533
(43) Veröffentlichungstag der Anmeldung: 21.04.1999
(73) Patentinhaber: Deutsche Telekom AG, 53113 Bonn (DE)
(72) Erfinder: SCHAEFER-LORINSER, Frank, D-64372 Ober-Ramstadt (DE); SCHEERHORN, Alfred, D-49716 Meppen (DE)
(86) Internationale Anmeldenummer: EP9702894
(87) Internationale Veröffentlichungsnummer: WO9746983

(56) Entgegenhaltungen:
- EP-A- 0 409 701
- DE-A- 4 419 805
- FR-A- 2 471 003

## Beschreibung

Die Erfindung bezieht sich auf ein Verfahren, wie im Oberbegriff des Patentanspruchs 1 näher beschrieben und auf eine Vorrichtung der im Oberbegriff des Patentanspruchs 9 definierten Art. Verschiedene bekannte Verfahren dieser Art werden für Chipkarten mit Börsenfunktion in mehreren Varianten verwendet und bei den Vorrichtungen kann u.a. von Chipschaltungen entsprechend EP 0 616 429 A1 ausgegangen werden.

Verfahren der hier gemeinten Art sind z.B. aus ETSI D/EN/TE 090114, Terminal Equipment (TE) Requirements for IC cards and terminals for telecommunication use, Part 4 - Payment methods Version 4 v. 07. Febr. 1992 und aus der Europäischen Patentanmeldung 0 605 070 bekannt.

Neben Telefonkarten mit definiertem Anfangsguthaben als Zahlungsmittel für Kartentelefone sind auch elektronische Geldbörsen nach dem gleichen Prinzip als Zahlungsmittel für begrenzte Beträge von zunehmender Bedeutung. Für den Anwendungsfall "Bezahlen mit der Chipkarte"ist ein entsprechendes Kartenlesermodul mit einem Sicherheitsmodul SM zur Karten- und Guthabenprüfung in den Automaten gekoppelt.

Aus der EP 0 605 070 A2 ist auch ein Verfahren zum Transferieren von Buchgeldbeträgen auf und von Chipkarten bekannt, bei dem überschreibbare Speicherplätze einer Chipkarte aufgeteilt werden in wenigstens zwei Speicherplätze, von denen einer debitorisch, also als elektronische Geldbörse genutzt wird, so wie die Telefonkarten, und der andere kreditorisch im Sinne einer Kreditkarte. Unter den für Kreditkarten üblichen gesicherten Bedingungen ist es vorgesehen, Geldbeträge zwischen den Bereichen zu transferieren, um die elektronische Geldbörse wieder aufzufüllen.

Zur Vermeidung sowohl der Gefahren unbefugter Zugriffe auf die Kassenautomaten und deren fest im Gerät integrierte Sicherheitsmodule, als auch der Notwendigkeit von besonders geschützten und deshalb für den Betreiber teuren Standleitungen wurde mit DE 195 45 705 ein Verfahren vorgeschlagen, bei dem vom Betreiber des Kassenautomaten vor den Kassiervorgängen ein Sicherheitsmodul mit Chipkartenfunktionen in die Kassenautomaten eingesteckt wird und bei jedem Kassiervorgang, bei dem ein Kartennutzer seine Chipkarte mit Börsenfunktion in einen Kassenautomaten eingesteckt hat, zuerst Datenbereiche der Chipkarte für eine Plausibilitätskontrolle und die Prüfung des Restguthabens ausgelesen, danach eine Authentifikation mit dem Sicherheitsmodul und eine ein- oder mehrmalige Akzeptanzentscheidung durchgeführt werden und bei dem zuletzt der fällige bzw. eingegebene Geldbetrag aus der Chipkarte des Kartennutzers mit Hilfe einer Sicherheitsfunktion ab- und einem Summenzähler für Geldbeträge im Sicherheitsmodul aufgebucht werden und bei dem nach den Kassiervorgängen der Zählerstand des Sicherheitsmoduls mit Chipkartenfunktionen an eine Abrechnungszentrale übergeben wird.

Aufgabe der Erfindung ist es, die Sicherheit der Kassenautomaten für die elektronischen Geldbörsen gegenüber Manipulationen und Fehlfunktionen noch weiter zu erhöhen.

Diese Aufgabe löst ein Verfahren entsprechend dem Patentanspruch 1.

Vorteilhafte Aus- bzw. Weiterbildungsmöglichkeiten dieses Verfahrens sind in den Unteransprüchen 2 bis 8 aufgeführt.

Im Patentanspruch 9 ist eine für die Anwendung des erwähnten Verfahrens geeignete Vorrichtung beschrieben.

Die Unteransprüche 10 bis 14 nennen vorteilhafte Aus- bzw. Weiterbildungsmöglichkeiten dieser Vorrichtungen für verschiedene Anwendungen.

Die Erfindung ist mit ihren Wirkungen, Vorteilen und Anwendungsmöglichkeiten in den nachfolgenden Ausführungsbeispielen näher beschrieben.

Authentikationsalgorithmen werden i.A. zur sicheren Identifizierung verwendet. In Authentikationsverfahren gehen, neben der Identität von Chipkarten und Personen sowie evtl. eines Sicherheitsmoduls SM, oft noch weitere Daten ein, deren Korrektheit zusätzlich gesichert werden soll. Ein Authentikationsverfahren kann zum Beispiel auch auf nicht geheime Kartendaten D zusammen mit einem geheimen Schlüssel K und einer Zufallszahl Z angewendet werden. Bei den Chipkarten mit Börsenfunktion wird für die Ab- und Aufbuchungen sicherheitshalber je eine getrennte Sicherheitsfunktion verwendet, die jeweils mit einer kryptografischen Prüfsumme ausgelesen wird.

Mit dem Verfahren nach der Erfindung können die Ab- und Aufbuchungen mit einem kryptografischen Token durchgeführt werden, wobei vorausgesetzt wird, daß die Authentikation und die kryptografische Prüfsumme über den Zählerstand mit einem Challenge/Response-Verfahren durchgeführt werden. Dann kann durch ein einzelnes Challenge/Response-Verfahren, bei dem nur eine Zufallszahl von dem Sicherheitsmodul SM geliefert wird und von der Chipkarte nur eine Response berechnet wird, sowohl die Identität (Authentikation) als auch der interne Zählerstand gegenüber dem Sicherheitsmodul SM bewiesen werden.

Dies kann dadurch erreicht werden, daß die variablen Inputdaten, wie der Zählerstand und die Zufallszahl, intern jeweils zunächst mit keyed Hashfunctions (= MAC-Funktionen) bearbeitet werden. Dabei wird als Schlüssel der kartenindividuelle geheime Schlüssel der Chipkarte verwendet. Die beiden aus Zählerstand und Zufallszahl gewonnenen Token können dann in - möglicherweise kryptografisch unsicherer Art - z.B. durch XOR oder ein linear rückgekoppeltes Schieberegister miteinander verknüpft werden und hiernach mit einer kryptografischen Funktion ausreichender Stärke integritätsgeschützt ausgegeben werden.

Diese Verfahrensweise ist für die Praxis dadurch interessant, daß die nur intern verwendeten keyed Hashfunctions keinen besonders hohen Ansprüchen hinsichtlich ihrer Sicherheit genügen müssen und relativ einfache Funktionen anwendbar sind, weil die Ergebnisse dieser Funktionen nicht aus der Chipkarte nach außen geführt werden. Dennoch werden damit Datenmanipulationen wirksam verhindert.

Das Ausführungsbeispiel der Erfindung geht von einem linear rückgekoppelten Schieberegister LFSR mit zusätzlicher nichtlinearer Funktion und nachgeschalteten Zählern aus:
0. Zusätzliche Rückkopplungen nach den nachgeschalteten Zählern in das linear rückgekoppelte Schieberegister LFSR werden geschaltet.
1. Es werden Inputdaten, bestehend aus den nicht geheimen Kartendaten D und dem geheimen Schlüssel K, in das linear rückgekoppelten Schieberegister LFSR eingelesen, während sowohl die Rückkopplung des linear rückgekoppelten Schieberegisters LFSR, als auch die zusätzliche(n) Rückkopplung(en) aktiv sind.
2. Es wird eine gewisse Anzahl von Takten weitergeschaltet, ohne daß zusätzliche Inputdaten eingelesen werden.
3. Es werden Inputdaten, bestehend aus der Zufallszahl R, eingelesen, während sowohl die Rückkopplung des LFSR, als auch die zusätzliche Rückkopplung(en) aktiv sind.
4. Es werden die zusätzlichen Rückkopplungen ausgeschaltet und ggf. die Zähler geändert.
5. Es wird eine gewisse Anzahl von Takten weitergeschaltet und während dieser Takte gemäß der aktuellen Zählerstände Outputbits erzeugt.

## Patentansprüche

1. Verfahren zum Laden von Inputdaten in einen Algorithmus bei der Authentikation zwischen Chipkarten mit Börsenfunktion und einem Sicherheitsmodul, bei dem der Kartennutzer über ein gespeichertes Guthaben verfügen kann und bei dem bei jedem Kassiervorgang der erforderliche, bzw. der vom Kartennutzer eingegebene Geldbetrag aus der Chipkarte des Kartennutzers mit Hilfe einer Sicherheitsfunktion abgebucht und die Geldbeträge in einem Summenzähler für Geldbeträge des Sicherheitsmoduls aufaddiert und gespeichert werden, und bei dem für den Authentikationsalgorithmus ein linear rückgekoppeltes Schieberegister verwendet wird, dessen nichtlineare Funktion in Verbindung mit nachgeschalteten Zählern kryptografisch verstärkt wird, und bei dem Inputdaten, wie z.B. eine Zufallszahl, ein geheimer Schlüssel und nicht geheime Kartendaten, in diesen Algorithmus eingehen, **dadurch gekennzeichnet, daß** die Inputdaten in mehrere Blöcke von Daten aufgeteilt werden und daß während des Ladens der Blöcke in das linear rückgekoppelte Schieberegister eine zusätzliche weitere Rückkopplung nach den nachgeschalteten Zählern in das Schieberegister eingeführt und nach einer vorgegebenen Anzahl von Taktschritten abgeschaltet wird.

2. Verfahren nach Anspruch 1, **dadurch gekennzeichnet, daß** 2 A1 die Kartendaten D mit einem geheimen Schlüssel K als ein erster Block und eine Zufallszahl R als ein weiterer Block eingeführt werden.

3. Verfahren nach Anspruch 1 und 2, **dadurch gekennzeichnet, daß** während der Ladephase der Inputdaten andere Zählerstände eingesetzt werden, als bei der darauf folgenden Phase nach Einladen der Inputdaten zur Berechnung des Authentikationstokens.

4. Verfahren nach Anspruch 1 und 2, **dadurch gekennzeichnet, daß** der erste nachgeschaltete Zähler auf 1 zählt.

5. Verfahren nach Anspruch 1 und 2, **dadurch gekennzeichnet, daß** die Zähler und die Anzahl der auszuführenden Takte genau so gewählt werden, daß das Authentikationstoken nach einer durch andere Systembedingungen fest vorgegebenen Anzahl von Takten errechnet wird.

6. Verfahren nach einem der Ansprüche 1 bis 5, **dadurch gekennzeichnet, daß** die Ausgabe von Bits nach Einladen aller Inputdaten beginnt.

7. Verfahren nach einem der Ansprüche 1 bis 6, **dadurch gekennzeichnet, daß** zwischen dem Einladen der Blöcke aus Anspruch 1 unter Beibehaltung der zusätzlichen Rückkopplung die gesamte Schaltung einige Schritte weiter getaktet wird, ohne daß Inputdaten geladen werden und bevor Bits ausgegeben werden.

8. Verfahren nach einem der Ansprüche 1 bis 6, **dadurch gekennzeichnet, daß** zwischen dem Einladen der Blöcke aus Anspruch 1 nach Abschalten der zusätzlichen Rückkopplung die gesamte Schaltung eine bestimmte Anzahl von Schritten weiter getaktet wird, ohne daß Inputdaten geladen werden und bevor Bits ausgegeben werden.

9. Vorrichtung zum Laden von Inputdaten in einen Algorithmus bei der Authentikation unter Verwendung einer kryptografischen MAC Funktion, bestehend aus einem linear rückgekoppelten Schieberegister mit einer nichtlinearen "Feed Forward"Funktion, die aus dem Schieberegister abgreift und über einen Zähler den Output des Schieberegisters beeinflußt, dem ein weiterer Zähler nachgeschaltet ist, **dadurch gekennzeichnet, daß** die aus dem linear rückgekoppelten Schieberegister aufgebaute Schaltung mit nachgeschalteten Zählern zur Verwendung für den Authentikationsalgorithmus durch eine zusätzliche abschaltbare nichtlineare Rückkopplung kryptografisch verstärkt ist.

10. Vorrichtung nach Anspruch 9, **dadurch gekennzeichnet, daß** die zusätzliche Rückkopplung nach dem ersten nachgeschalteten Zähler vor einem Latch abgegriffen ist.

11. Vorrichtung nach Anspruch 9, **dadurch gekennzeichnet, daß** die zusätzliche Rückkopplung aus dem Latch nach dem ersten nachgeschalteten Zähler abgegriffen ist.

12. Vorrichtung nach Anspruch 9, **dadurch gekennzeichnet, daß** die zusätzliche Rückkopplung nach dem zweiten nachgeschalteten Zähler abgegriffen ist.

13. Vorrichtung nach Anspruch 9, **dadurch gekennzeichnet, daß** die zusätzliche Rückkopplung als eine XOR-Summe der Abgriffe nach dem ersten nachgeschalteten Zähler vor dem Latch, aus dem Latch nach dem ersten nachgeschalteten Zähler und nach dem zweiten nachgeschalteten Zähler ausgebildet ist.

14. Vorrichtung nach Anspruch 9, **dadurch gekennzeichnet, daß** die Zähler aufgeteilt bzw. verkleinert sind.

## Claims

1. Process for loading input data into an algorithm during the authentication between chipcards with purse function and a security module, in which the card user has access to a stored credit balance and in which, at each transaction, the required cash amount or the cash amount entered by the card user is deducted from the chipcard of the card user with the aid of a security function and the cash amounts are summated and stored in a summator for cash amounts of the security module, and in which a linear feedback shift register is used for the authentication algorithm, the nonlinear function of said shift register being cryptographically reinforced in conjunction with downstream counters, and in which input data, such as a random number, a secret key and non-secret card data, are included in said algorithm, **characterized in that** the input data are divided into a plurality of blocks of data and **in that**, during the loading of the blocks into the linear feedback shift register, an additional further feedback after the downstream counters is introduced into the shift register and is disconnected after a given number of clock pulse steps.

2. Process according to claim 1, **characterized in that** 2 A1 the card data D with a secret key K are introduced as a first block and a random number R is introduced as a further block.

3. Process according to claims 1 and 2, **characterized in that**, during the loading phase of the input data, different counts are used than in the following phase after loading in of the input data for calculation of the authentication token.

4. Process according to claims 1 and 2, **characterized in that** the first downstream counter counts to 1.

5. Process according to claims 1 and 2, **characterized in that** the counters and the number of clock pulses to be executed are selected precisely such that the authentication token is calculated after a number of clock pulses fixed by other system conditions.

6. Process according to any one of claims 1 to 5, **characterized in that** the output of bits begins after all the input data have been loaded in.

7. Process according to any one of claims 1 to 6, **characterized in that**, between the loading in of the blocks from claim 1 and with the additional feedback being maintained, the entire circuit arrangement is clocked a few steps further without input data being loaded and before bits are output.

8. Process according to any one of claims 1 to 6, **characterized in that**, between the loading in of the blocks from claim 1 and after the additional feedback has been disconnected, the entire circuit arrangement is clocked a certain number of steps further without input data being loaded and before bits are output.

9. Device for loading input data into an algorithm during authentication using a cryptographic MAC function, consisting of a linear feedback shift register with a nonlinear feed forward function which picks off the shift register and, via a counter, influences the output of the shift register which is followed by a further counter,
**characterized in that**, for use for the authentication algorithm, the circuit arrangement composed of the linear feedback shift register with downstream counters is cryptographically reinforced by an additional disconnectable nonlinear feedback.

10. Device according to claim 9, **characterized in that** the additional feedback is picked off after the first downstream counter before a latch.

11. Device according to claim 9, **characterized in that** the additional feedback is picked off from the latch after the first downstream counter.

12. Device according to claim 9, **characterized in that** the additional feedback is picked off after the second downstream counter.

13. Device according to claim 9, **characterized in that** the additional feedback is in the form of an XOR sum of the pick-offs after the first downstream counter before the latch, from the latch after the first downstream counter and after the second downstream counter.

14. Device according to claim 9, **characterized in that** the counters are divided or reduced in size.

## Revendications

1. Procédé de chargement de données d'entrée dans un algorithme lors de l'authentification entre cartes à puce avec fonction de bourse et un module de sécurité, dans lequel l'utilisateur de la carte peut disposer d'un avoir enregistré et, à chaque opération de caisse, le montant nécessaire ou introduit par l'utilisateur de la carte est retiré de l'avoir de la carte à puce à l'aide d'une fonction de sécurité, les montants étant additionnés et mémorisés dans un totalisateur du module de sécurité, et dans lequel est utilisé pour l'algorithme d'authentification un registre à décalage à rétroaction linéaire dont la fonction non linéaire est renforcée cryptographiquement en liaison avec des compteurs placés en arrière, et dans lequel des données d'entrée, telles qu'un nombre aléatoire, une clé secrète et des données non secrètes sur la carte, sont prises en compte dans cet algorithme, **caractérisé en ce que** les données d'entrée sont réparties en plusieurs blocs de données et **en ce que**, pendant le chargement des blocs dans le registre à décalage à rétroaction linéaire, une réaction additionnelle est introduite dans le registre à décalage après les compteurs placés en arrière, puis désactivée après un nombre déterminé d'impulsions.

2. Procédé selon la revendication 1, **caractérisé en ce que** 2 A1 les données de la carte D sont introduites avec une clé secrète K en un premier bloc et un nombre aléatoire R en un deuxième bloc.

3. Procédé selon les revendications 1 et 2, **caractérisé en ce que**, lors de la phase de chargement des données d'entrée, d'autres états de compteur sont pris en compte que lors de la phase suivante après chargement des données d'entrée pour le calcul du jeton d'authentification.

4. Procédé selon les revendications 1 et 2, **caractérisé en ce que** le premier compteur placé en arrière compte à partir de 1.

5. Procédé selon les revendications 1 et 2, **caractérisé en ce que** les compteurs et le nombre des impulsions à générer sont déterminés de façon à ce que le jeton d'authentification soit calculé en fonction d'un nombre donné d'impulsions imposé par d'autres conditions du système.

6. Procédé selon l'une des revendications 1 à 5, **caractérisé en ce que** l'émission de bits commence après chargement de toutes les données d'entrée.

7. Procédé selon l'une des revendications 1 à 6, **caractérisé en ce que**, entre le chargement des blocs de la revendication 1, l'ensemble du montage est soumis, la rétroaction additionnelle étant maintenue, à une cadence décalée de quelques impulsions en avant, sans que des données d'entrée soient chargées et avant que des bits soient émis.

8. Procédé selon l'une des revendications 1 à 6, **caractérisé en ce que**, entre le chargement des blocs de la revendication 1, l'ensemble du montage est soumis, après désactivation de la rétroaction additionnelle, à une cadence décalée de quelques impulsions en avant, sans que des données d'entrée soient chargées et avant que des bits soient émis.

9. Dispositif de chargement de données d'entrée dans un algorithme lors de l'authentification, ayant recours à une fonction cryptographique MAC, constitué d'un registre à décalage à rétroaction linéaire avec fonction « *feed forward »* non linéaire, extrayant des données du registre à décalage et influant par le biais d'un compteur sur la sortie du registre à décalage, derrière lequel est placé un autre compteur, **caractérisé en ce que** le montage effectué à partir du registre à décalage à rétroaction linéaire avec compteurs placés en arrière est renforcé cryptographiquement par une rétroaction additionnelle non linéaire désactivable aux fins de son utilisation pour l'algorithme d'authentification.

10. Dispositif selon la revendication 9, **caractérisé en ce que** la rétroaction additionnelle est saisie après le premier compteur arrière avant un latch.

11. Dispositif selon la revendication 9, **caractérisé en ce que** la rétroaction additionnelle à la sortie du latch est saisie après le premier compteur placé en arrière.

12. Dispositif selon la revendication 9, **caractérisé en ce que** la rétroaction additionnelle est saisie après le deuxième compteur placé en arrière.

13. Dispositif selon la revendication 9, **caractérisé en ce que** la rétroaction additionnelle est formée d'une somme XOR des saisies opérées après le premier compteur arrière avant le latch, à la sortie du latch après le premier compteur placé en arrière et après le deuxième compteur placé en arrière.

14. Dispositif selon la revendication 9, **caractérisé en ce que** les compteurs sont répartis ou réduits.
